# EUROPEAN PATENT APPLICATION

(11) **EP 4 676 001 A1**
(43) Date of publication of application: **07.01.2026**
(21) Application number: 24785187.6
(22) Date of filing: 03.04.2024
(51) Int. Cl.: H04L 61/3015, H04L 67/10, H04L 67/303, H04W 88/14

(54) **METHOD AND DEVICE FOR GENERATION, ALLOCATION, AND MANAGEMENT OF TERMINAL IDENTIFIER**

(30) Priority: 03.04.2023 KR 20230043660
(71) Applicant: Samsung Electronics Co., Ltd., Suwon-si, Gyeonggi-do 16677 (KR)
(72) Inventor: KIM, Hyesung, Suwon-si, Gyeonggi-do 16677 (KR); LEE, Cheolung, Suwon-si, Gyeonggi-do 16677 (KR)
(74) Representative: HGF
(86) International application number: PCT/KR2024/004279
(87) International publication number: WO 2024/210482

(57) **Abstract**

The present disclosure relates to a 5G or 6G communication system for supporting a higher data transmission rate. The present disclosure provides a terminal identifier generation, allocation, and management method and device required to provide a terminal identifier to an external server which provides a service requiring linkage to a mobile communication system. The present disclosure provides a device and a method which can effectively provide a service in a mobile communication system.

## Description

### [Technical Field]

The disclosure relates generally to a wireless communication system and, more specifically, to generation (creation), allocation, and management of a UE identifier.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Embodiments set forth herein are to provide a device and a method capable of effectively providing services in a mobile communication system.

The technical subjects pursued in various embodiments of the disclosure may not be limited to the above-mentioned matters, and other technical subjects which are not mentioned herein may be considered from the following description of various embodiments of the disclosure by those skilled in the art to which the disclosure pertains.

### [Solution to Problem]

According to an embodiment of the disclosure, a method performed by a terminal in a communication system may be provided.

According to an embodiment of the disclosure, the method may include: transmitting a terminal identifier request message for edge computing; receiving a terminal identifier response message for edge computing, related to the terminal identifier request message for edge computing; and acquiring a terminal identifier included in the terminal identifier response message for edge computing.

According to an embodiment of the disclosure, in case that the terminal identifier request message for edge computing includes information regarding an edge application server (EAS) bundle including at least one EAS and information related to a request for a shared terminal identifier from the at least one EAS included in the EAS bundle, the terminal identifier may be mapped to the EAS bundle.

According to an embodiment of the disclosure, in case that the terminal identifier request message for edge computing includes information regarding the EAS bundle and information related to a request for the shared terminal identifier, the terminal identifier response message for edge computing may include terminal identifier type information indicating that the terminal identifier is the shared terminal identifier.

According to an embodiment of the disclosure, the terminal identifier request message for edge computing may include at least one of an EAS port identifier or an EAS supplier identifier.

According to an embodiment of the disclosure, the terminal identifier may be an EAS-specific terminal identifier corresponding to at least one of the EAS port identifier or the EAS provider identifier included in the terminal identifier request message for edge computing.

According to an embodiment of the disclosure, in case that the terminal identifier request message for edge computing includes information related to a request for the shared terminal identifier, the terminal identifier response message for edge computing may be based on an edge enabler server (EES).

According to an embodiment of the disclosure, in case that the terminal identifier request message for edge computing does not include information related to a request for the shared terminal identifier, the terminal identifier response message for edge computing may be based on a unified data management (UDM), and the terminal identifier may correspond to an application function (AF)-specific terminal identifier.

According to an embodiment of the disclosure, a terminal in a communication system may be provided.

According to an embodiment of the disclosure, the terminal may include a transceiver and a processor connected to the transceiver. The processor may be configured to: transmit a terminal identifier request message for edge computing; receive a terminal identifier response message for edge computing, related to the terminal identifier request message for edge computing; and acquire a terminal identifier included in the terminal identifier response message for edge computing.

According to an embodiment of the disclosure, in case that the terminal identifier request message for edge computing includes information regarding an edge application server (EAS) bundle including at least one EAS and information related to a request for a shared terminal identifier from the at least one EAS included in the EAS bundle, the terminal identifier may be mapped to the EAS bundle.

According to an embodiment of the disclosure, in case that the terminal identifier request message for edge computing includes information regarding the EAS bundle and information related to a request for the shared terminal identifier, the terminal identifier response message for edge computing may include terminal identifier type information indicating that the terminal identifier is the shared terminal identifier.

According to an embodiment of the disclosure, the terminal identifier request message for edge computing may include at least one of an EAS port identifier or an EAS supplier identifier.

According to an embodiment of the disclosure, the terminal identifier may be an EAS-specific terminal identifier corresponding to at least one of the EAS port identifier or the EAS provider identifier included in the terminal identifier request message for edge computing.

According to an embodiment of the disclosure, in case that the terminal identifier request message for edge computing includes information related to a request for the shared terminal identifier, the terminal identifier response message for edge computing may be based on an edge enabler server (EES).

According to an embodiment of the disclosure, in case that the terminal identifier request message for edge computing does not include information related to a request for the shared terminal identifier, the terminal identifier response message for edge computing may be based on a unified data management (UDM), and the terminal identifier may correspond to an application function (AF)-specific terminal identifier.

According to an embodiment of the disclosure, a method performed by an edge enabler server (EES) in a communication system may be provided.

According to an embodiment of the disclosure, the method may include: receiving a terminal identifier request message for edge computing, the terminal identifier request message for edge computing including information regarding an edge application server (EAS) bundle including at least one EAS and information related to a request for a shared terminal identifier from the at least one EAS included in the EAS bundle; acquiring a terminal identifier related to the terminal identifier request message for edge computing, the terminal identifier being mapped to the EAS bundle; and transmitting a terminal identifier response message for edge computing, including the terminal identifier.

According to an embodiment of the disclosure, the terminal identifier response message for edge computing may include terminal identifier type information indicating that the terminal identifier is the shared terminal identifier.

According to an embodiment of the disclosure, the terminal identifier request message for edge computing may include at least one of an EAS port identifier or an EAS supplier identifier.

According to an embodiment of the disclosure, the terminal identifier may be an EAS-specific terminal identifier corresponding to at least one of the EAS port identifier or the EAS provider identifier included in the terminal identifier request message for edge computing.

According to an embodiment of the disclosure, the terminal identifier response message for edge computing may be transmitted to a terminal corresponding to the terminal identifier and to the at least one EAS included in the EAS bundle.

According to an embodiment of the disclosure, an edge enabler server (EES) in a communication system may be provided.

According to an embodiment of the disclosure, the EES may include a transceiver and a processor connected to the transceiver. The processor may be configured to: receive a terminal identifier request message for edge computing, the terminal identifier request message for edge computing including information regarding an edge application server (EAS) bundle including at least one EAS and information related to a request for a shared terminal identifier from the at least one EAS included in the EAS bundle; acquiring a terminal identifier related to the terminal identifier request message for edge computing, the terminal identifier being mapped to the EAS bundle; and transmitting a terminal identifier response message for edge computing, including the terminal identifier.

According to an embodiment of the disclosure, the terminal identifier response message for edge computing may include terminal identifier type information indicating that the terminal identifier is the shared terminal identifier.

According to an embodiment of the disclosure, the terminal identifier response message for edge computing may be transmitted to a terminal corresponding to the terminal identifier and to the at least one EAS included in the EAS bundle.

According to an embodiment of the disclosure, the terminal identifier request message for edge computing may include at least one of an EAS port identifier or an EAS supplier identifier.

According to an embodiment of the disclosure, the terminal identifier may be an EAS-specific terminal identifier corresponding to at least one of the EAS port identifier or the EAS provider identifier included in the terminal identifier request message for edge computing.

Various embodiments of the disclosure described above are only some of preferred embodiments of the disclosure, and various embodiments in which technical features of various embodiments of the disclosure are reflected may be derived and understood by those skilled in the art, based on the following detailed description.

### [Advantageous Effects of Invention]

Embodiments set forth herein provide a device and a method capable of effectively providing services in a mobile communication system.

Advantageous effects obtainable from various embodiments of the disclosure may not be limited to the above-mentioned effects, and other effects which are not mentioned herein may be clearly derived and understood, based on the following description, by those skilled in the art to which the disclosure pertains.

### [Brief Description of Drawings]

FIG. 1 illustrates a wireless communication system according to an embodiment of the disclosure.
FIG. 2 illustrates an example of an edge computing system architecture and a structure of interworking with a mobile communication core network according to an embodiment of the disclosure.
FIG. 3 illustrates an example of a method for generating and managing a UE identifier according to an embodiment of the disclosure.
FIG. 4 illustrates an example of a method for generating and managing a UE identifier according to an embodiment of the disclosure.
FIG. 5 illustrates an example of a method for generating and managing a UE identifier according to an embodiment of the disclosure.
FIG. 6 illustrates a structure of a UE to which the disclosure is applicable.
FIG. 7 illustrates a structure of a base station to which the disclosure is applicable.
FIG. 8 illustrates a structure of a network entity to which the disclosure is applicable.

### [Mode for the Invention]

Hereinafter, exemplary embodiments of the disclosure will be described in detail with reference to the accompanying drawings. The terms which will be described below are terms defined in consideration of the functions in the disclosure, and may be different according to users, intentions of the users, or customs. They may be different according to users, intentions of the users, or customs, and therefore, the definitions of the terms should be made based on the contents throughout the specification.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

As used herein, terms referring to network entities and entities of an edge computing system, terms referring to messages, terms referring to identification information, and the like are illustratively used for the sake of descriptive convenience. Therefore, the disclosure is not limited by the terms as described below, and other terms referring to subjects having equivalent technical meanings may also be used.

In the following description, a base station is an entity that allocates resources to terminals, and may be at least one of a Node B, a base station (BS), an eNode B (eNB), a gNode B (gNB), a wireless access unit, a base station controller, and a node on a network. A terminal may include a user equipment (UE), a mobile station (MS), a cellular phone, a smartphone, a computer, or a multimedia system capable of performing a communication function. Furthermore, the embodiments of the disclosure as described below may also be applied to other communication systems having similar technical backgrounds or channel types to the embodiments of the disclosure. Moreover, based on determinations by those skilled in the art, the embodiments of the disclosure may also be applied to other communication systems through some modifications without significantly departing from the scope of the disclosure. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, some of terms and names defined in the 3rd generation partnership project (3GPP) long term evolution (LTE) standards and/or 3GPP new radio (NR) standards may be used for the sake of descriptive convenience. However, the disclosure is not limited by these terms and names, and may be applied in the same way to systems that conform other standards.

In the following description, the disclosure will be described using terms and names defined in the 5G system standards for the descriptive convenience, but the disclosure is not limited by these terms and names and may be applied in the same way to systems that conform other standards.

In order for a server installed outside an operator's 3GPP mobile communication system to interwork with network functions of the mobile communication system for providing services to users, UE identifiers are required. In addition, such UE identifiers must be assigned different values with regard to respective externally installed servers (and/or with regard to respective applications) such that external tracking of the services used by users is impossible. However, manually pre-configuring UE identifiers that are identifiable within the mobile communication system for servers located outside the mobile communication system entails a significant operational burden. Furthermore, every time a new application server is newly installed and instantiated, manually generating and storing new UE identifiers with regard to the new application within the mobile communication system also imposes a large operational burden.

The disclosure proposes a method for generating, allocating, and managing UE identifiers necessary for interworking between a mobile communication system and a communication network's external server (a server installed outside the mobile communication system) or for interworking between external servers. The disclosure proposes a method for supporting the allocation and management of UE identifiers for acquiring information necessary for providing user services from a communication system (a mobile communication system) and using the acquired information at a server located outside the mobile communication network.

The disclosure proposes a method for generating, allocating, and managing UE identifiers necessary to provide UE identifiers to an external server that provides services requiring interworking with a mobile communication system. To this end, the disclosure proposes a method for generating and configuring UE identifiers at a network function or an external server. In relation thereto, the disclosure proposes a method for generating different UE identifiers with regard to respective applications when generating UE identifiers, and a method for generating UE identifiers that may be commonly used among multiple applications, respectively.

The disclosure provides a temporary UE identifier to a server installed outside an operator's network, thereby enabling the use of 3GPP network exposure functions for providing services to users.

The disclosure enables dynamic generation, storage, and configuration of UE identifiers within a 3GPP network to provide different UE identifiers with regard to respective services or external application servers.

The disclosure minimizes the tracking of a user's personal information by using UE identifiers in interworking between external servers and a 3GPP network.

For convenience of the following description, the disclosure will be described with reference to an edge computing server (for example, one or more of an edge enabler server (EES), an edge configuration server (ECS), and an edge application server (EAS)) as an example of an external server. However, the disclosure is not limited by the above terms and names, and may be equally applied to other forms of external servers. That is, although embodiments of the disclosure are described in the description of the disclosure with an edge computing server as a specific example, the disclosure is not limited thereto. For example, the method proposed in the disclosure may be applied to UE identifier requests requested by all application servers capable of interworking with a 3GPP network system.

For convenience of the following description, entities that exchange information for access control and state management will be collectively referred to as NFs. The NFs may be, for example, at least one device among an access and mobility management function (hereinafter referred to as AMF) device, a session management function (hereinafter referred to as SMF) device, and a network slice selection function (hereinafter referred to as NSSF) device. However, embodiments of the disclosure may be equally applied even to cases in which the NFs are actually implemented as instances (an AMF instance, an SMF instance, an NSSF instance, and the like, respectively).

In the disclosure, an instance may refer to a state in which a specific NF exists in the form of software code, and has physical and/or logical resources allocated from a computing system in order to perform functions of the NF in a physical computing system, for example, a specific computing system existing on a core network, and can execute the same. Therefore, an AMF instance, an SMF instance, and an NSSF instance may mean that physical and/or logical resources are allocated from a specific computing system existing on the core network for the sake of AMF, SMF, and NSSF operations, respectively, and can be used. Consequently, physically existing AMF, SMF, and NSSF devices may perform identical operations as an AMF instance, an SMF instance, and an NSSF instance which have physical and/or logical resources allocated from a specific computing system existing on the core network for the sake of AMF, SMF, and NSSF operations, respectively, and use the same.

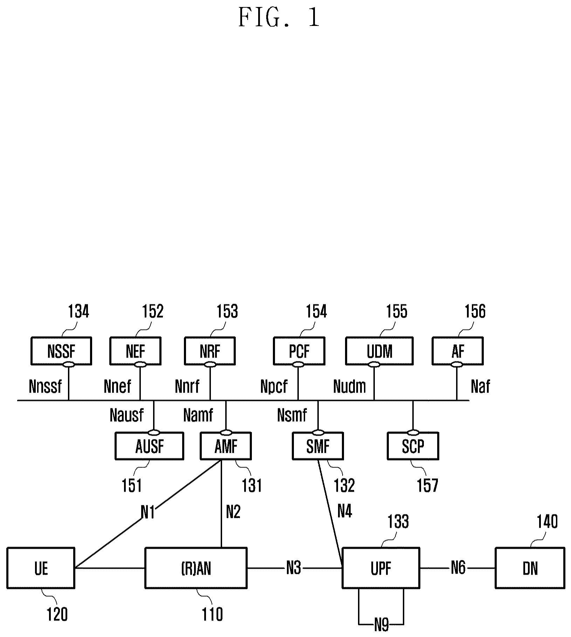

FIG. 1 illustrates a wireless communication system according to an embodiment of the disclosure.

Referring to FIG. 1, as part of nodes using a radio channel in the wireless communication system, a base station (radio access node (RAN) 110 and user equipment (UE) 120 are illustrated. Although FIG. 1 illustrates only one base station 110 and one UE 120, other base stations identical or similar to the base station 110 may be further included. In addition, FIG. 1 illustrates only a case in which only one UE 120 communicates within one base station 110. However, it is obvious that in practice, multiple UEs may communicate within one base station 110.

The base station 110 is a network infrastructure that provides wireless access to the UE 120. The base station 110 has a coverage which is defined as a specific geographical area based on the distance over which signals can be transmitted (not illustrated in FIG. 1). The base station 110 may be referred to by other terms having equivalent technical meaning, such as "access point (AP)," "eNodeB (eNB)," "5^{th} generation node (5G node)," "wireless point," "transmission/reception point (TRP)," in addition to "base station."

The UE 120 is a device used by a user, and performs communication with the base station 110 through a radio channel. In some cases, the UE 120 may be operated without user involvement. For example, the UE 120 may be a device that performs machine type communication (MTC), and may not be carried by the user. The UE 120 illustrated in FIG. 1 may include at least one user-carried device and may include at least one MTC. The UE 120 of FIG. 1 may be referred to by other terms having equivalent technical meaning, such as "terminal," "mobile station," "subscriber station," "remote terminal," "wireless terminal," or "user device."

The AMF device 131 may be a network entity that manages wireless network access and mobility regarding the UE 120. The SMF device 132 may be a network entity that manages the connection of a packet data network for providing packet data to the UE 120. The connection between the UE 120 and the SMF 132 may be a PDU session.

The user plane function (hereinafter referred to as UPF) device 133 may be a network entity that serves as a gateway or performs a gateway role for delivering packets transmitted/received by the UE 120. The UPF 133 may be connected to a data network (DN) 140 connected to the Internet, thereby providing a path for data transmission/reception between the UE 120 and the DN 140. Therefore, the UPF 133 may route data that needs to be delivered to the Internet, among the packets transmitted by the UE 120, to the Internet data network.

The network slice selection function (NSSF) device 134 may be a network entity that performs network selection operations described in the disclosure, for example, an operation of selecting a network slice. The operation of the NSSF device 134 will be described in more detail in the drawings to be described later.

The authentication server function (AUSF) device 151 may be equipment (network entity) that provides services for subscriber authentication processing.

The network exposure function (NEF) device 152 can access information for managing the UE 120 in the 5G network, and may be a network entity capable of subscribing to mobility management events of the UE, subscribing to session management events of the UE, requesting session-related information, configuring the UE's billing information, requesting changes to the PDU session policy regarding the UE, and transmitting small data regarding the UE.

The network repository function (NRF) device 153 stores status information of NFs and may be a network entity (NF) having a function to process requests for finding NFs that other NFs can connect to.

The policy and charging function (PCF) device 154 may be a network entity that applies the mobile communication operator's service policies regarding the UE 120, charging policies, and policies regarding PDU sessions.

The unified data management (UDM) device 155 may be a network entity that stores information regarding subscribers and/or the UE 120.

The application function (AF) device 156 may be network entity (NF) that has the function of providing services to users in conjunction with the mobile communication network.

The service communication proxy (SCP) device 157 is a network entity (NF) that provides functions such as NF discovery for communication between NFs and message delivery between NFs. The SCP 157 may operate while being integrated with the NRF 153 according to the operator's selection, and in this case, the SCP 157 may include the functions of the NRF 153, or conversely, the NRF 153 may include the functions of the SCP 157.

For convenience of the following description, entities that exchange information for access control and state management will be collectively referred to as NFs. The NFs may be, for example, at least one device among an access and mobility management function (hereinafter referred to as AMF) device, a session management function (hereinafter referred to as SMF) device, and a network slice selection function (hereinafter referred to as NSSF) device. However, embodiments of the disclosure may be equally applied even to cases in which the NFs are actually implemented as instances (an AMF instance, an SMF instance, an NSSF instance, and the like, respectively).

In the disclosure, an instance may refer to a state in which a specific NF exists in the form of software code, and has physical and/or logical resources allocated from a computing system in order to perform functions of the NF in a physical computing system, for example, a specific computing system existing on a core network, and can execute the same. Therefore, an AMF instance, an SMF instance, and an NSSF instance may mean that physical and/or logical resources are allocated from a specific computing system existing on the core network for the sake of AMF, SMF, and NSSF operations, respectively, and can be used. Consequently, physically existing AMF, SMF, and NSSF devices may perform identical operations as an AMF instance, an SMF instance, and an NSSF instance which have physical and/or logical resources allocated from a specific computing system existing on the core network for the sake of AMF, SMF, and NSSF operations, respectively, and use the same. Therefore, in embodiments of the disclosure, entities described as NFs (AMF, SMF, UPF, NSSF, NRF, SCP, etc.) may be replaced with NF instances, or conversely, entities described as NF instances may be replaced with NFs and applied. Similarly, in embodiments of the disclosure, entities described as NW slices may be replaced with NW slice instances, or conversely, entities described as NW slice instances may be replaced with NW slices and applied.

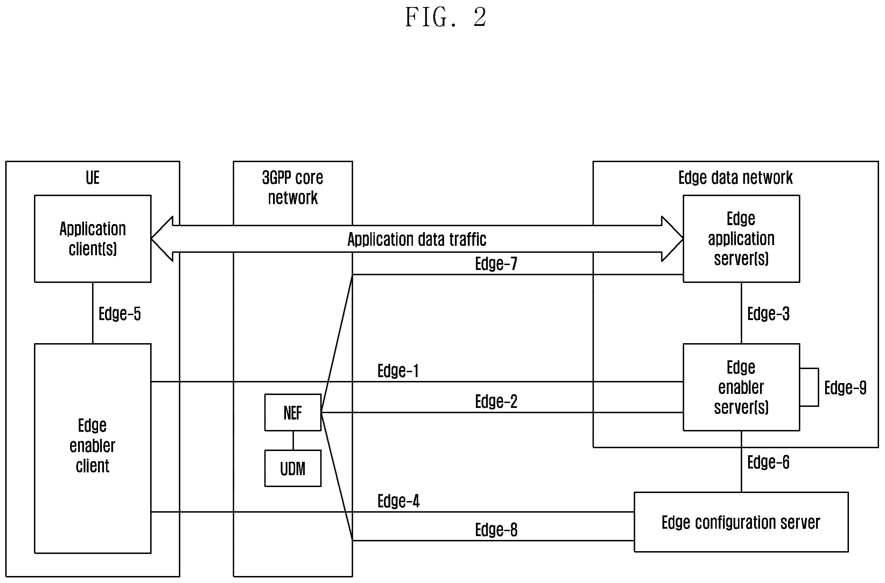

FIG. 2 illustrates an example of an edge computing system architecture and a structure of interworking with a mobile communication core network according to an embodiment of the disclosure.

Referring to FIG. 2, an example of networks and edge computing entities in the edge computing system architecture and the structure of interworking with the mobile communication core network is illustrated. The description of the networks and edge computing entities illustrated in FIG. 2 is as follows.

The edge computing system may be configured by an edge enabler server, an edge data network configuration server, and an edge enabler client (EEC). The edge computing system may include an edge enabler server, an edge data network configuration server, and an EEC.

The edge enabler server is deployed on an edge hosting environment (or an edge computing platform) and has information regarding the edge application server running in the edge hosting environment.

The edge enabler server performs a function of negotiating with user equipment (UE) (for example, the UE in FIG. 2) so as to connect the UE's application client with an edge application server in the edge hosting environment. A UE that supports the edge computing system may have an embedded edge enabler client, and the negotiation may proceed through interworking between the edge enabler client and the edge enabler server. The layer on which interworking between the edge enabler client and the edge enabler server, such as the above negotiation, is performed may be referred to as an edge enabling layer. The UE mentioned in the disclosure includes not only smartphones but also IoT devices, vehicles, and the like.

The edge configuration server has deployment information of edge enabler servers and performs a function of delivering configuration information for using edge computing services to the UE. The configuration information may include at least one from among edge data network connection information (e.g., data network name, single network slice selection assistance information (S-NSSAI), etc.), edge data network service area information (e.g., cell list, list of tracking areas, public land mobile network (PLMN) ID), edge enabler server connection information (e.g., uniform resource identifier (URI)), and the like. The edge data network service area information may be information regarding an edge enabler server available area configured by the edge enabler server. Based on this, the UE may receive information regarding edge enabler servers accessible at a specific location. In case that the edge data network configuration server may have information regarding the edge application server currently running in the edge hosting environment of a specific edge enabler server, the UE may also obtain the corresponding information (information regarding the edge application server) through the edge enabler client.

The edge application server refers to a third-party application server running within the edge computing system. The edge application server is a third-party application server running on the infrastructure provided by the edge hosting environment. The edge application server may provide services at a location close to the UE and may thus provide ultra-low latency services.

Within the UE, there may exist an application client, an edge enabler client (EEC) that interworks the application client with the edge computing service, and a mobile termination (MT) that connects to the mobile communication system. That is, the UE may include an application client, an EEC, and an MT.

The UE's application refers to a client application program which is provided by a third party so as to run within the UE for a specific application service. Multiple applications may run within the UE. At least one of the applications may use mobile edge computing (MEC) or multi-access edge computing services.

The edge enabler client in the UE refers to a client that performs operations within the UE necessary for using edge computing services. The edge enabler client may determine which applications can use edge computing services, and may perform an operation to connect a network interface such that data from the UE's application client can be delivered to the edge application server providing the edge computing service.

The operation for establishing a data connection to use the edge computing service may be performed in the 3GPP communication layer through the mobile terminal. The 3GPP communication layer may refer to a layer that performs modem operations for using the mobile communication system. The 3GPP communication layer establishes a wireless connection for data communication, registers the UE with the mobile communication system, establishes a connection for data transmission with the mobile communication system, and performs the role of transmitting/receiving data.

In the disclosure, the edge enabler server, the edge configuration server, and the edge application server may interwork with the mobile communication core network (3GPP core network). For example, a network function constituting the core network may be requested to provide UE-related information or related services through the network exposure function. For example, servers in the edge computing system may perform at least one of requesting generation/storage/provision of specific information to the unified data management (UDM) network function through the network exposure function.

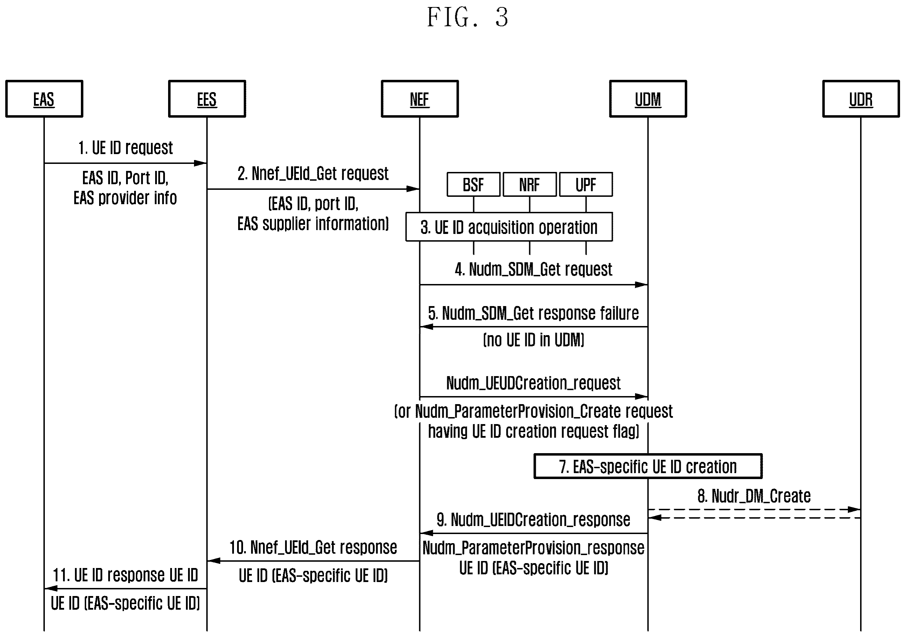

FIG. 3 illustrates an example of a method for generating and managing a UE identifier according to an embodiment of the disclosure. The method for generating and managing a UE identifier illustrated in FIG. 3 is merely for illustrative purposes, and other embodiments may be used without departing from the scope of the disclosure.

Referring to FIG. 3, according to an embodiment, a method for generating different UE identifiers according to applications and a method for managing the same may be provided. FIG. 3 may be an example of a method for supporting EAS-specific UE ID allocation and management based on NEF/UDM (or based on CN).

In operation 1, the EAS may transmit a UE identifier request (UE ID request) message to the EES. The UE identifier request message may include at least one piece of information from among the EAS ID, the EAS port ID, EAS provider information (for example, EAS provider identifier), the UE Internet protocol (IP) address, the IP domain, application layer UE user information (user identification information, etc.), and the like.

In operation 2, the EES may transmit a UE identifier request message (Nnef_UEId_Get request) to the NEF. The UE identifier request message may include at least one piece of information from among the EES ID, the EAS ID, the EAS port ID, EAS provider information, the UE IP address, the IP domain, application layer UE user information (for example, user identification information, etc.). For example, in case that at least one of predefined requirements/conditions is satisfied, an operation of requesting UE identifier information while providing EAS information to the NEF may be performed. That is, if at least one of the predefined requirements/conditions is satisfied, step 2 may be performed. For example, if all predefined requirements/conditions are not satisfied, step 2 may not be performed. For example, the predefined requirements/conditions may include at least one of a case in which the EES needs to acquire a UE identifier, a case in which it is specified in the edge computing service policy information within the EES that different UE identifiers must be received from the core network with regard to respective EASs, and the like.

In operation 3, the NEF finds (identifies) the subscription permanent identifier (SUPI) value corresponding to the UE IP address in the UE identifier request message received from the EES. This operation (UE ID Get operation) may be performed through the following procedures. That is, this operation may include at least one of the following procedures/operations. The NEF may provide the UE IP address (for example, UE public IP address) and IP domain information to the NRF and may acquire information regarding the UPF to which the UE is connected. The NEF may provide the UE IP address and IP domain information to the UPF (for example, the UPF corresponding to the UPF information) and may acquire the UE IP address value allocated or in use in the core network. The NEF may provide the UE IP address value (for example, UE private IP address) allocated or in use in the core network acquired from the UPF to the binding support function (BSF) and may acquire the SUPI value from the BSF, or may determine the SUPI value based on the IP address and SUPI mapping information stored in the NEF. Alternatively, the NEF may directly interwork with the BSF by using the UE IP address value provided from the EES to acquire the UE identifier SUPI value, without acquiring the UE's IP address value through the NRF and UPF.

In operation 4, the NEF may request UE identifier information that may be provided to the outside while providing the SUPI acquired in the previous step (operation 3), the EAS ID, the EAS port ID, and EAS provider information to the UDM. For example, the NEF may transmit an Nudm_SDM_Get request to the UDM. The Nudm_SDM_Get request may include request information regarding UE identifier information that may be provided to the outside. The Nudm_SDM_Get request may include at least one from among the SUPI, the EAS ID, the EAS port ID, and the EAS provider information.

In operation 5, the UDM may find (identify) the AF-specific UE identifier (and/or EAS-specific UE ID) stored in the UDM, based on the SUPI, EAS ID, EAS port ID, and EAS provider information provided by the NEF. The UE identifier identified by the UDM may be a UE identifier corresponding to the EAS information provided by the NEF (for example, at least one from among the EAS ID, EAS port ID, and EAS provider information). Different UE identifiers may be stored in the UDM with regard to different EASs. Based on the EAS information, a UE identifier corresponding to the EAS information, among the different UE identifiers, may be identified. In case that different UE identifiers are stored in the UDM with regard to respective EASs conforming to the EAS information provided by the NEF, the UDM may provide the corresponding identifier (the UE identifier conforming to the EAS information, for example, EAS-specific UE ID) to the NEF. In case that there is no UE identifier information conforming to the EAS information provided by the NEF in the UDM, a UE ID provision failure message may be provided to the NEF, together with cause information indicating the absence of the EAS-specific UE ID or AF-specific UE ID. For example, the UDM may transmit an Nudm_SDM_Get response to the NEF. In case that different UE identifiers are stored in the UDM with regard to respective EASs conforming to the EAS information, the Nudm_SDM_Get response may include the corresponding identifier (the UE identifier conforming to the EAS information). In case that there is no UE identifier information conforming to the EAS information provided by the NEF in the UDM, the Nudm_SDM_Get response may include a UE ID provision failure message/information (failure) and cause information regarding the failure (for example, no UE ID in UDM).

In operation 6, in case that the UDM does not provide an EAS-specific UE ID or AF-specific UE, and in case that the cause of the provision failure (which may correspond to cause information) is that no UE identifier (UE ID) conforming to the EAS information exists in the UDM, the NEF may transmit a request to generate and configure a UE ID to the UDM. The request message may include at least one piece of information from among the SUPI, EAS ID, EAS port ID, EAS provider information, UE ID creation request flag, and the like. Alternatively, the NEF may perform a UE ID configuration request while providing the UDM with an EAS-specific UE ID generated based on the EAS information and SUPI. For example, the NEF may transmit an Nudm_UEIDCreation_request (or an Nudm_ParameterProvision_CreateRequest having a UE ID creation request flag) to the UDM, and the Nudm_UEIDCreation_request (or Nudm_ParameterProvision_CreateRequest) may include at least one piece of information from among the SUPI, EAS ID, EAS port ID, EAS provider information, UE ID creation request flag, and the like, or may include an EAS-specific UE ID generated based on the EAS information and SUPI. In operation 7, the UDM may generate a new UE identifier (for example, an EAS-specific UE ID) based on the SUPI and EAS information (EAS ID, EAS port ID, EAS provider information, etc.) provided by the NEF in the previous step (operation 6) and may store the same in the UDM and UDR. Alternatively, the UDM may store the EAS-specific UE ID provided by the NEF together with the SUPI and EAS information in the UDM. Such operations for EAS-specific UE ID generation and storage may be performed after authentication in the UDM regarding whether a new UE identifier can be generated with regard to the corresponding EAS and UE.

In operation 8, the UDM may store the generated UE identifier or the UE identifier provided by the NEF in the unified data repository (UDR) by mapping the same with the SUPI and EAS information. To this end, Nudr_DM_Create may be transmitted/received between the UDM and the UDR.

In operation 9, the UDM may provide the NEF with whether the EAS-specific UE ID has been successfully configured/stored or may provide the EAS-specific UE ID generated by the UDM to the NEF. In another example, upon receiving a successful configuration/storage result regarding the EAS-specific UE ID generated by the NEF from the UDM, the NEF may store the EAS-specific UE ID in the UDR by mapping the same with the SUPI and EAS information. For example, the UDM may transmit an Nudm_UEIDCreation_response (or an Nudm_ParameterProvision_response) to the NEF, and the Nudm_UEIDCreation_response (or Nudm_ParameterProvision_response) may include information regarding whether the UE ID (for example, EAS-specific UE ID) has been successfully configured/stored or may include the UE ID (for example, EAS-specific UE ID) generated by the UDM.

In operation 10, the NEF may provide the EES with the EAS-specific UE ID successfully configured/stored in the UDM. For example, the NEF may transmit an Nnef_UEId_Get response to the EES, and the Nnef_UEId_Get response may include the UE ID (for example, EAS-specific UE ID).

In operation 11, the EES may provide the UE ID (for example, EAS-specific UE ID) received from the NEF to the EAS. For example, a UE ID response message may be used. In addition, the EES may store the EAS-specific UE ID by mapping the same with the EAS identifier, EAS port ID, EAS provider information (for example, EAS supplier identifier), UE IP address, IP domain, and application layer UE user information (user identification information, etc.) provided by the EAS.

In an embodiment of the disclosure described with reference to FIG. 3, the EAS-specific UE ID may be considered and handled the same as the AF-specific UE ID in the core network. In addition, the NEF may request the UDM or UDR to subscribe to a UE identifier information notification service in order to receive notifications regarding changes in the EAS-specific UE ID or changes in validity. To this end, the NEF may transmit a UE identifier information notification service subscription request message including EAS information and SUPI to the UDM or UDR.

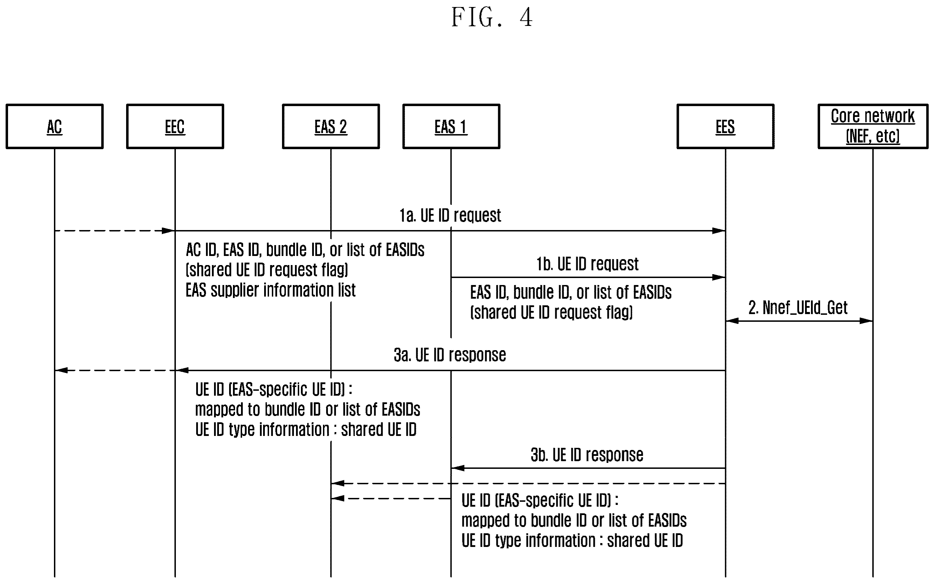

FIG. 4 illustrates an example of a method for generating and managing a UE identifier according to an embodiment of the disclosure. The method for generating and managing a UE identifier illustrated in FIG. 4 is merely for illustrative purposes, and other embodiments may be used without departing from the scope of the disclosure.

Referring to FIG. 4, according to an embodiment, a method for acquiring a UE identifier regarding an EAS bundle and a method for managing the same may be provided.
1. The EEC or application client (AC) in the UE may perform a UE identifier request to the EES as follows.

In operation 1a, the EEC may perform a UE identifier request to the EES according to an AC request or independent determination. For example, the EEC may transmit a UE identifier request message (for example, UE ID request) to the EES. The UE identifier request may include at least one from among UE IP address information, the AC ID, the EAS ID, the EAS bundle ID, EAS ID list information constituting the EAS bundle (for example, in case that EAS1 and EAS2 in FIG. 4 constitute the EAS bundle, EAS1 ID and EAS2 ID may be included in the EAS ID list information), a shared UE ID flag, an EAS provider information list, and the like. Such pieces of information may be information received from the AC, information configured in the EEC, or at least a part of information included in the EAS profile received from the EES through an EAS discovery procedure. For example, the shared UE ID flag may be information regarding a condition or requirement indicating that it is necessary to use a common identical UE identifier to identify the UE between different EASs included in the EAS bundle. In case that such shared UE ID flag information is provided from the EEC to the EES, the same may be used to indicate a request for allocation/configuration/storage of the same UE identifier with regard to a specific EAS list (which may correspond to the EAS ID list information, for example).

In operation 1b, the EAS (for example, EAS1) may perform a UE identifier request by transmitting a message (for example, UE ID request) including at least one from among UE IP address information, the EAS ID, the EAS bundle ID, EAS ID list information constituting the EAS bundle, the shared UE ID flag, the EAS provider information list, and the like to the EES. In case that the EAS needs to provide a service while interworking with multiple different EASs (for example, EAS2) with regard to a specific UE, the EAS may transmit a UE identifier request message including the ID list of EASs participating in the interworking, or an EAS bundle ID that may be used to identify the EAS group participating in the interworking, to the EES. In addition, in case that the EAS needs to use the same UE identifier between different EASs included in such an EAS bundle, the EAS may transmit a UE identifier request message including the shared UE ID flag to the EES.

In operation 2, for example, the EES may transmit an Nnef_UEId_Get request to the CN (for example, NEF etc.), and the CN (for example, NEF etc.) may transmit an Nnef_UEId_Get response to the EES. The EES may acquire or generate an EAS-specific UE identifier from a network function (for example, NEF) of the core network by using the UE IP address and EAS information (including at least one from among, for example, the AC ID, the EAS ID, the EAS bundle ID, EAS ID list information constituting the EAS bundle, and EAS provider information) received from the EEC or EAS. If the EES has received a request including the shared UE ID flag together with the EAS bundle information in the previous step (operation 1a or operation 1b), the EES may configure the UE identifier received from the core network to be commonly used with regard to all EASs included in the EAS bundle. Alternatively, in case that the EES generates a UE identifier (for example, EAS-specific UE ID), the generated UE identifier (for example, EAS-specific UE ID) may be configured to be commonly used with regard to the EASs included in the EAS bundle. For example, the EES may map the EAS bundle ID or EAS ID list received from the EAS or EEC in the previous step (operation 1a or operation 1b) with a common EAS-specific UE identifier (for example, EAS bundle-specific UE ID), and may store and use the same. In addition, the EES may configure the UE ID type information regarding such a common EAS-specific UE identifier (for example, EAS bundle-specific UE ID) as a shared UE ID, may store the same, and may provide the same to the EEC and EAS.

3. The EES may provide the common EAS-specific UE identifier (EAS bundle-specific UE ID) acquired or configured/stored in the previous step (operation 2) to the EEC and EAS as follows.

In operation 3a, the EES may provide the EEC with a common EAS-specific UE identifier (for example, EAS bundle-specific UE ID), UE ID type information (for example, shared UE ID), and a UE identifier availability range (which may include information such as an edge enabler layer, an edge computing service provider (ECSP) ID, an EES ID, or a PLMN ID. Alternatively, the same may include information indicating whether the provided UE identifier can be used for direct communication with the core network, such as a core network target availability indicator. For example, if core network-related information such as a PLMN ID is provided together, the same may mean that the UE identifier provided by the EES can be used when the EAS invokes an API provided by a network function such as an NEF through the EDGE-7 interface. The same may indicate whether the corresponding UE identifier is usable in the core network identified by the PLMN ID). The common EAS-specific UE identifier (for example, EAS bundle-specific UE ID) transmitted from the EES to the EEC may be provided by being mapped with the AC ID and the EAS bundle ID or EAS ID list regarding the corresponding AC. For example, the EES may transmit a UE ID response to the EEC. The UE ID response may include a UE ID (for example, common EAS-specific UE identifier (for example, EAS bundle-specific UE ID)). The UE ID (for example, common EAS-specific UE identifier (for example, EAS bundle-specific UE ID)) may be mapped with at least one of a bundle ID (for example, EAS bundle ID), a list of EAS IDs, and UE ID type information (for example, information configured to indicate a shared UE ID). For example, the EEC may transmit at least a part of the information provided from the EES to the AC, and the AC may transmit at least a part of the information received from the EEC to the EAS. If the AC receives a service through direct communication with EAS1, at least a part of the information received from the EEC (for example, UE ID (for example, common EAS-specific UE identifier (for example, EAS bundle-specific UE ID))) and the application layer identifier used in the AC and EAS1 may be transmitted to EAS1. The information received by EAS1 from the AC in this manner may be shared with EAS2 and may be used by EAS1 and EAS2 to invoke the API of the EES.

In operation 3b, the EES may provide the common EAS-specific UE identifier (for example, EAS bundle-specific UE ID) to multiple EASs (for example, EAS1, EAS2) included in the EAS bundle or to an EAS (for example, EAS1). The common EAS-specific UE identifier (for example, EAS bundle-specific UE ID) may be provided from the EES to the EAS together with at least one from among UE ID type information (for example, a value configured as a shared UE ID), a UE identifier availability range (which may include information such as an edge enabler layer, an ECSP ID, an EES ID, or a PLMN ID. Alternatively, the same may include information indicating whether the provided UE identifier can be used for direct communication with the core network, such as a core network target availability indicator. For example, if core network-related information such as a PLMN ID is provided together, the same may mean that the UE identifier provided by the EES can be used when the EAS invokes an API provided by a network function such as an NEF through the EDGE-7 interface. The same may indicate whether the corresponding UE identifier is usable in the core network identified by the PLMN ID), an EAS bundle ID, or an EAS ID list. The common EAS-specific UE identifier (EAS bundle-specific UE ID) transmitted from the EES to the EAS may be provided by being mapped to the EAS bundle ID or EAS ID list. The EES may individually and directly provide the common EAS-specific UE identifier to the EASs registered with itself among all EASs included in the EAS bundle. Later, in case that one of the EASs included in the EAS bundle requests a UE identifier from the EES, the EES may provide the common EAS-specific UE identifier regarding the corresponding EAS bundle. For example, the EES may transmit a UE ID response to EAS1 and/or EAS2. The UE ID response may include a UE ID (for example, common EAS-specific UE identifier (for example, EAS bundle-specific UE ID)). The UE ID (for example, common EAS-specific UE identifier (for example, EAS bundle-specific UE ID)) may be mapped with at least one from among a bundle ID (for example, EAS bundle ID), a list of EAS IDs, and UE ID type information (for example, information configured to indicate a shared UE ID). For example, (in case that the EES provides a UE ID response to EAS1) EAS1 may transmit, among information provided from the EES, the UE ID (for example, common EAS-specific UE identifier (for example, EAS bundle-specific UE ID)) and at least a part of other information, to EAS2. EAS2 may use the UE ID and information received from EAS1 to invoke the API provided by the EES.

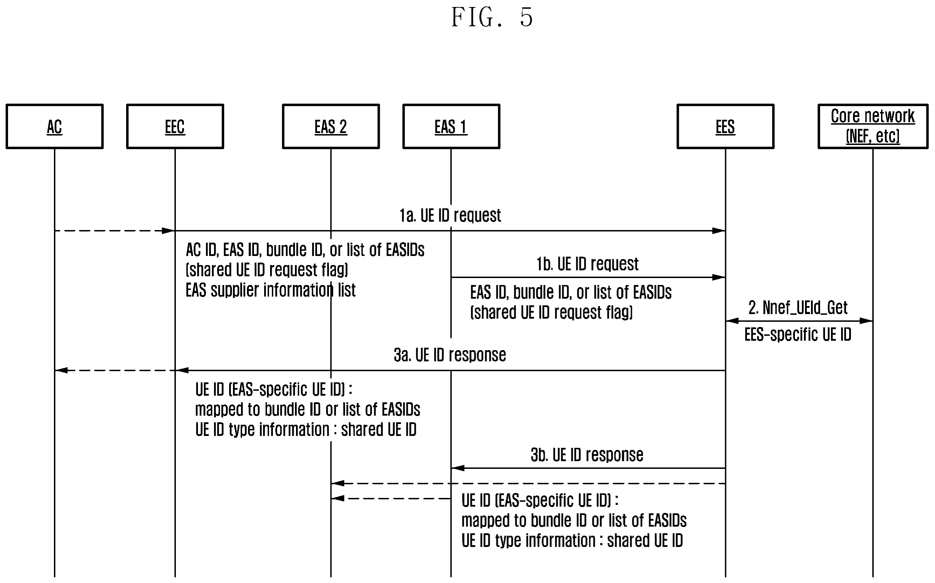

FIG. 5 illustrates an example of a method for generating and managing a UE identifier according to an embodiment of the disclosure. The method for generating and managing a UE identifier illustrated in FIG. 5 is merely for illustrative purposes, and other embodiments may be used without departing from the scope of the disclosure.

Referring to FIG. 5, according to an embodiment, a method for acquiring a UE identifier regarding an EAS bundle and a method for managing the same may be provided.
1. The EEC or EAS in the UE may perform a UE identifier request to the EES as follows.

In operation 1a, the EEC may perform a UE identifier request to the EES according to an AC request or independent determination. For example, the EEC may transmit a UE identifier request message (for example, UE ID request) to the EES. The UE identifier request may include at least one from among UE IP address information, an AC ID, an EAS ID, an EAS bundle ID, EAS ID list information constituting the EAS bundle, a shared UE ID flag, an EAS provider information list, and the like. Such information may be information received from the AC, information configured in the EEC, or at least a part of information included in the EAS profile received from the EES through an EAS discovery procedure. For example, the shared UE ID flag may be information regarding a condition or requirement indicating that it is necessary to use a common identical UE identifier to identify the UE between different EASs included in the EAS bundle. In case that such shared UE ID flag information is provided from the EEC to the EES, the same may be used to indicate a request for allocation/configuration/storage of the same UE identifier with regard to a specific EAS list (which may correspond to the EAS ID list information, for example).

In operation 1b, the EAS (for example, EAS1) may perform a UE identifier request by transmitting a message (for example, UE ID request) including at least one from among UE IP address information, the EAS ID, the EAS bundle ID, EAS ID list information constituting the EAS bundle, the shared UE ID flag, the EAS provider information list, and the like to the EES. In case that the EAS needs to provide a service while interworking with multiple different EASs (for example, EAS2) with regard to a specific UE, the EAS may transmit a UE identifier request message including the ID list of EASs participating in the interworking, or an EAS bundle ID that may be used to identify the EAS group participating in the interworking, to the EES. In addition, in case that the EAS needs to use the same UE identifier between different EASs included in such an EAS bundle, the EAS may transmit a UE identifier request message including the shared UE ID flag to the EES.

In operation 2, for example, the EES may transmit an Nnef_UEId_Get request to the CN (for example, NEF etc.), and the CN (for example, NEF etc.) may transmit an Nnef_UEId_Get response to the EES. The EES may acquire or generate an EES-specific UE identifier from a network function (for example, NEF) of the core network by using at least one from among the AF ID (or EES ID) allocated to the EES, the EES port ID, and EES provider information, without using the UE IP address and EAS information (including at least one from among, for example, the AC ID, the EAS ID, the EAS bundle ID, EAS ID list information constituting the EAS bundle, and EAS provider information) received from the EEC or EAS. Then, the EES may generate an EAS-specific UE identifier at the EES, based on the EES-specific UE identifier and EAS information, and may store the same by mapping the same with the EAS information and EES-specific UE identifier. For example, when the EES performs operation 2 in FIG. 5 to transmit a UE identifier request message to the NEF, the EES may provide the NEF with the UE IP address information provided by the EAS and the AF ID (or EES ID) allocated to the EES, the EES port ID, EES provider information, etc., without using the EAS information received from the EAS, may acquire a UE identifier regarding the same, and may use the same to generate the EAS-specific UE identifier. The EAS-specific UE identifier generated by the EES, based on the EAS information and the UE identifier acquired from the core network, is a UE identifier used within the edge computing system and may be referred to as an edge enabler layer UE ID or an edge UE ID, and may not be directly used for interworking with the core network because the same is a UE identifier dedicated to edge computing.

If the EES has received a request including the shared UE ID flag together with the EAS bundle information in the previous step (operation 1a or operation 1b), the EES generates one EAS-specific UE identifier that can be commonly used in the EAS bundle when generating the EAS-specific UE identifier. If the EES has received a UE identifier request message including no shared UE ID flag from the EAS, the EES generates different UE identifiers with regard to respective EASs.

3. The EES may map and store the common EAS-specific UE identifier (for example, EAS bundle-specific UE ID) generated in the previous step (operation 2) with the EES-specific UE identifier, and may provide the common EAS-specific UE identifier (EAS bundle-specific UE ID) to the EEC and EAS as follows.

In operation 3a, the EES may provide the EEC with a common EAS-specific UE identifier (for example, EAS bundle-specific UE ID), UE ID type information (for example, shared UE ID), and a UE identifier availability range (which may include information such as an edge enabler layer, an ECSP ID, an EES ID, or a PLMN ID. Alternatively, the same may include information indicating whether the provided UE identifier can be used for direct communication with the core network, such as a core network target availability indicator. For example, if core network-related information such as a PLMN ID is provided together, the same may mean that the UE identifier provided by the EES can be used when the EAS invokes an API provided by a network function such as an NEF through the EDGE-7 interface. The same may indicate whether the corresponding UE identifier is usable in the core network identified by the PLMN ID). The common EAS-specific UE identifier (for example, EAS bundle-specific UE ID) transmitted from the EES to the EEC may be provided by being mapped with the AC ID and the EAS bundle ID or EAS ID list regarding the corresponding AC. For example, the EES may transmit a UE ID response to the EEC. The UE ID response may include a UE ID (for example, common EAS-specific UE identifier (for example, EAS bundle-specific UE ID)). The UE ID (for example, common EAS-specific UE identifier (for example, EAS bundle-specific UE ID)) may be mapped with at least one of a bundle ID (for example, EAS bundle ID), a list of EAS IDs, and UE ID type information (for example, information configured to indicate a shared UE ID). For example, the EEC may transmit at least a part of the information provided from the EES to the AC. The AC may transmit at least a part of the information received from the EEC to the EAS. For example, if the AC receives a service through direct communication with EAS1, at least a part of the information received from the EEC (for example, UE ID (for example, common EAS-specific UE identifier (for example, EAS bundle-specific UE ID))) and the application layer identifier used in the AC and EAS1 may be transmitted to EAS1. The information received by EAS1 from the AC in this manner may be shared with EAS2 and may be used by EAS1 and EAS2 to invoke the API of the EES.

In operation 3b, the EES may provide the common EAS-specific UE identifier (for example, EAS bundle-specific UE ID) to multiple EASs (for example, EAS1, EAS2) included in the EAS bundle or to an EAS (for example, EAS1). The common EAS-specific UE identifier (for example, EAS bundle-specific UE ID) may be provided from the EES to the EAS together with at least one from among UE ID type information (for example, a value configured as a shared UE ID), a UE identifier availability range (which may include information such as an edge enabler layer, an ECSP ID, an EES ID, or a PLMN ID. The same may also include information indicating whether the provided UE identifier can be used for direct communication with the core network. For example, if core network-related information such as a PLMN ID is provided together, the same may mean that the UE identifier provided by the EES can be used when the EAS invokes an API provided by a network function such as an NEF through the EDGE-7 interface. The same may indicate whether the corresponding UE identifier is usable in the core network identified by the PLMN ID), an EAS bundle ID, or an EAS ID list. The common EAS-specific UE identifier (EAS bundle-specific UE ID) transmitted from the EES to the EAS may be provided by being mapped to the EAS bundle ID or EAS ID list. The EES may individually and directly provide the common EAS-specific UE identifier to the EASs registered with itself among all EASs included in the EAS bundle. Later, in case that one of the EASs included in the EAS bundle requests a UE identifier from the EES, the EES may provide the common EAS-specific UE identifier regarding the corresponding EAS bundle. For example, the EES may transmit a UE ID response to EAS1 and/or EAS2. The UE ID response may include a UE ID (for example, common EAS-specific UE identifier (for example, EAS bundle-specific UE ID)). The UE ID (for example, common EAS-specific UE identifier (for example, EAS bundle-specific UE ID)) may be mapped with at least one from among a bundle ID (for example, EAS bundle ID), a list of EAS IDs, and UE ID type information (for example, information configured to indicate a shared UE ID). For example, (in case that the EES provides a UE ID response to EAS 1) EAS 1 may transmit the UE ID (for example, common EAS-specific UE identifier (for example, EAS bundle-specific UE ID)) provided from the EES and at least a part of other information, to EAS2.

In one embodiment of the disclosure described with reference to FIG. 4 or in one embodiment of the disclosure described with reference to FIG. 5, the EAS-specific UE ID provided by the EES to the EAS may be used later to invoke services provided by the EES. In case that an EAS-specific UE identifier is used when the EAS invokes a service of the EES, the EES may find an EES-specific UE identifier (e.g., a UE identifier that may be used when interworking with the core network) mapped to the EAS-specific UE identifier and may perform interworking with the core network. In addition, the EAS-specific UE ID provided by the EES to the EAS may also be used when invoking APIs provided by network functions of the core network through EDGE-7. However, not all EAS-specific UE IDs provided by the EES may be usable when invoking APIs of the core network. In case that the EES generates the EAS-specific UE ID independently and provides the same to the EAS without configuring the same for the core network, the EAS may not be able to use the EAS-specific UE ID in connection with the core network. In case that the EES has acquired the EAS-specific UE ID from the core network or has configured the generated EAS-specific UE ID for the core network, the EAS may use the EAS-specific UE ID in connection with the core network. The EES may provide information regarding whether the EAS-specific UE ID can be used in connection with the core network to the EAS together with the EAS-specific UE ID. Additionally, the EES may also provide the EAS with availability range information indicating that the EAS-specific UE ID can be used by a specific edge computing service provider (ECSP) or PLMN.

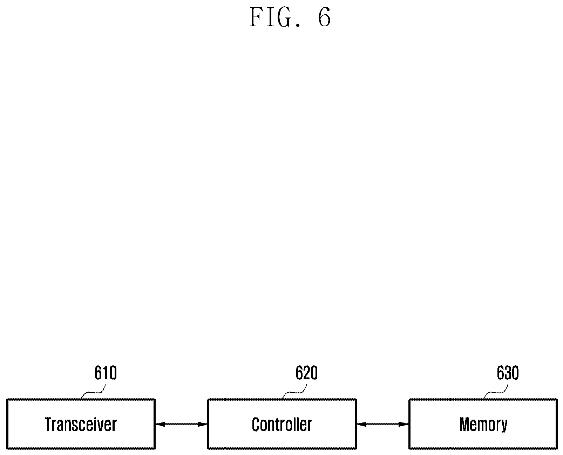

FIG. 6 illustrates a structure of a UE to which the disclosure is applicable.

Referring to FIG. 6, the UE 600 may include a transceiver 610, a controller 620, and a memory 630. As used herein, the controller may be defined as a circuit, an application specific integrated circuit, or at least one processor.

The transceiver 610 may transmit/receive signals with base stations and network entities.

The controller 620 may control the overall operation of the UE according to the embodiments proposed in the disclosure. For example, the controller 620 may control the transceiver 610 or the memory 630 to perform the operations according to the above-described embodiments. For example, the controller 620 may control signal flows between respective blocks to perform the operations according to the above-described embodiments.

The memory 630 may store at least one of information transmitted/received through the transceiver 610 and information generated through the controller620.

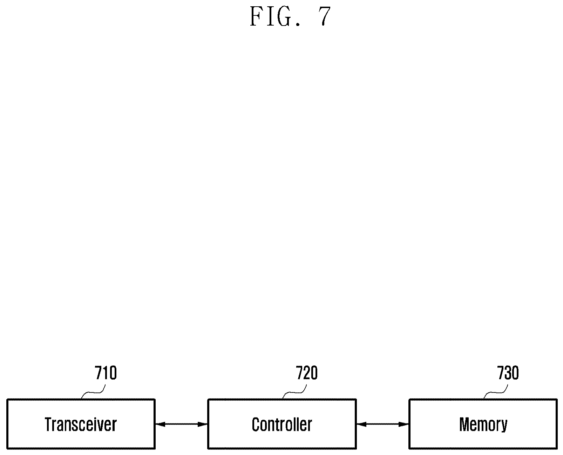

FIG. 7 illustrates a structure of a base station to which the disclosure is applicable.

Referring to FIG. 7, the base station 700 may include a transceiver 710, a controller 720, and a memory 730. As used herein, the controller 720 may be defined as a circuit, an application specific integrated circuit, or at least one processor.

The transceiver 610 may transmit/receive signals with UEs and network entities.

The controller 720 may control the overall operation of the base station according to the embodiments proposed in the disclosure. For example, the controller 720 may control the transceiver 710 and the memory 730 to perform the operations according to the above-described embodiments. For example, the controller 720 may control signal flows between respective blocks to perform the operations according to the above-described embodiments.

The memory 730 may store at least one of information transmitted/received through the transceiver 710 and information generated through the controller720.

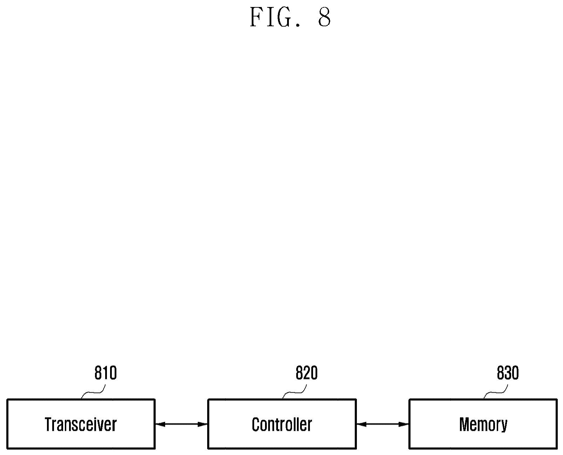

FIG. 8 illustrates a structure of a network entity to which the disclosure is applicable.

Referring to FIG. 8, the network entity 800 may include a transceiver 810, a controller 820, and a memory 830. As used herein, the network entity (or node) may be an NEF, an NF, or a UDM on a core network, or a node or an external server on an external network. For example, in a case where the external server is an edge computing server, the network entity may be an EED, an EAS, an ECS, or the like. As used herein, the controller may be defined as a circuit, an application specific integrated circuit, or at least one processor.

The transceiver 810 may transmit/receive signals with UEs, base stations, and other network entities.

The controller 820 may control the overall operation of the network entity 800 according to the embodiments proposed in the disclosure. For example, the controller 820 may control the transceiver 810 and the memory 830 to perform the operations according to the above-described embodiments. For example, the controller 820 may control signal flows between respective blocks to perform the operations according to the above-described embodiments.

The memory 830 may store at least one of information transmitted/received through the transceiver 80 and information generated through the controller820.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a terminal in a communication system, the method comprising:
transmitting a terminal identifier request message for edge computing;
receiving a terminal identifier response message for the edge computing, related to the terminal identifier request message for the edge computing; and
acquiring a terminal identifier included in the terminal identifier response message for the edge computing,
wherein, in case that the terminal identifier request message for the edge computing comprises information regarding an edge application server (EAS) bundle comprising at least one EAS and information related to a request for a shared terminal identifier from the at least one EAS included in the EAS bundle, the terminal identifier is mapped to the EAS bundle.

2. The method of claim 1, wherein, in case that the terminal identifier request message for the edge computing comprises the information regarding the EAS bundle and the information related to the request for the shared terminal identifier, the terminal identifier response message for the edge computing comprises terminal identifier type information indicating that the terminal identifier is the shared terminal identifier.

3. The method of claim 1, wherein the terminal identifier request message for the edge computing comprises at least one of an EAS port identifier or an EAS supplier identifier, and
wherein the terminal identifier is an EAS-specific terminal identifier corresponding to at least one of the EAS port identifier or the EAS supplier identifier included in the terminal identifier request message for the edge computing.

4. The method of claim 1, wherein, in case that the terminal identifier request message for the edge computing comprises the information related to the request for the shared terminal identifier, the terminal identifier response message for the edge computing is based on an edge enabler server (EES), and
wherein, in case that the terminal identifier request message for the edge computing does not comprise the information related to the request for the shared terminal identifier, the terminal identifier response message for the edge computing is based on a unified data management (UDM), and the terminal identifier corresponds to an application function (AF)-specific terminal identifier.

5. A terminal in a communication system, the terminal comprising:
a transceiver; and
a processor connected to the transceiver,
wherein the processor is configured to:
transmit a terminal identifier request message for edge computing;
receive a terminal identifier response message for the edge computing, related to the terminal identifier request message for e the dge computing; and
acquire a terminal identifier included in the terminal identifier response message for the edge computing, and
wherein, in case that the terminal identifier request message for the edge computing comprises information regarding an edge application server (EAS) bundle comprising at least one EAS and information related to a request for a shared terminal identifier from the at least one EAS included in the EAS bundle, the terminal identifier is mapped to the EAS bundle.

6. The terminal of claim 5, wherein, in case that the terminal identifier request message for the edge computing comprises the information regarding the EAS bundle and the information related to the request for the shared terminal identifier, the terminal identifier response message for the edge computing comprises terminal identifier type information indicating that the terminal identifier is the shared terminal identifier.

7. The terminal of claim 5, wherein the terminal identifier request message for the edge computing comprises at least one of an EAS port identifier or an EAS supplier identifier, and
wherein the terminal identifier is an EAS-specific terminal identifier corresponding to at least one of the EAS port identifier or the EAS supplier identifier included in the terminal identifier request message for the edge computing.

8. The terminal of claim 5, wherein, in case that the terminal identifier request message for the edge computing comprises the information related to the request for the shared terminal identifier, the terminal identifier response message for the edge computing is based on an edge enabler server (EES), and
wherein, in case that the terminal identifier request message for the edge computing does not comprise the information related to the request for the shared terminal identifier, the terminal identifier response message for the edge computing is based on a unified data management (UDM), and the terminal identifier corresponds to an application function (AF)-specific terminal identifier.

9. A method performed by an edge enabler server (EES) in a communication system, the method comprising:
receiving a terminal identifier request message for edge computing, the terminal identifier request message for the edge computing comprising information regarding an edge application server (EAS) bundle comprising at least one EAS and information related to a request for a shared terminal identifier from the at least one EAS included in the EAS bundle;
acquiring a terminal identifier related to the terminal identifier request message for the edge computing, the terminal identifier being mapped to the EAS bundle; and
transmitting a terminal identifier response message for the edge computing, comprising the terminal identifier.

10. The method of claim 9, wherein the terminal identifier response message for the edge computing comprises terminal identifier type information indicating that the terminal identifier is the shared terminal identifier.

11. The method of claim 9, wherein the terminal identifier request message for the edge computing comprises at least one of an EAS port identifier or an EAS supplier identifier, and
wherein the terminal identifier is an EAS-specific terminal identifier corresponding to at least one of the EAS port identifier or the EAS supplier identifier included in the terminal identifier request message for the edge computing.

12. The method of claim 9, wherein the terminal identifier response message for the edge computing is transmitted to a terminal corresponding to the terminal identifier and to the at least one EAS included in the EAS bundle.

13. An edge enabler server (EES) in a communication system, the EES comprising:
a transceiver; and
a processor connected to the transceiver,
wherein the processor is configured to:
receive a terminal identifier request message for edge computing, the terminal identifier request message for the edge computing comprising information regarding an edge application server (EAS) bundle comprising at least one EAS and information related to a request for a shared terminal identifier from the at least one EAS included in the EAS bundle;
acquiring a terminal identifier related to the terminal identifier request message for the edge computing, the terminal identifier being mapped to the EAS bundle; and
transmitting a terminal identifier response message for the edge computing, comprising the terminal identifier.

14. The EES of claim 13, wherein the terminal identifier response message for the edge computing comprises terminal identifier type information indicating that the terminal identifier is the shared terminal identifier, and
wherein the terminal identifier response message for the edge computing is transmitted to a terminal corresponding to the terminal identifier and to the at least one EAS included in the EAS bundle.

15. The EES of claim 13, wherein the terminal identifier request message for the edge computing comprises at least one of an EAS port identifier or an EAS supplier identifier, and
wherein the terminal identifier is an EAS-specific terminal identifier corresponding to at least one of the EAS port identifier or the EAS supplier identifier included in the terminal identifier request message for the edge computing.
